# EUROPEAN PATENT SPECIFICATION

(11) **EP 3 324 251 B1**
(45) Date of publication and mention of the grant of the patent: **26.08.2020**
(21) Application number: 16306530.3
(22) Date of filing: 21.11.2016
(51) Int. Cl.: G05B 15/02, G05B 9/02

(54) **METHOD FOR MANAGING ELECTRICAL SUPPLY OF A DEVICE AND SYSTEM FOR IMPLEMENTING SAID METHOD**
VERFAHREN ZUR VERWALTUNG DER STROMVERSORGUNG EINER VORRICHTUNG UND SYSTEM ZUR DURCHFÜHRUNG DES VERFAHRENS
PROCÉDÉ DE GESTION DE L'ALIMENTATION ÉLECTRIQUE D'UN DISPOSITIF ET UN SYSTÈME DE MISE EN OEUVRE DUDIT PROCÉDÉ

(43) Date of publication of application: 23.05.2018
(73) Proprietor: Electricité de France, 75008 Paris (FR)
(72) Inventor: AUGUSTIN, Bertrand, 78000 Versailles (FR); MANCEL, Florian, 91120 Palaiseau (FR); SOMERVILLE, John Matthew, 1015 Lausanne (CH); NOLAN, Charles Julian, 1015 Lausanne (CH)
(74) Representative: Plasseraud IP

(56) References cited:
- EP-A1- 2 523 150
- EP-A1- 2 738 719
- US-A1- 2016 163 186

## Description

### TECHNICAL FIELD

The invention pertains to the field of management of the electrical supply of devices, for example "smart devices" capable of exchanging status information with a central energy management unit. The method of the invention can more particularly be implemented to secure an environment in case of a hazardous situation such as a fire, in order for emergency services to intervene without being exposed to unnecessary electrical and, for example, fire hazard. The invention also limits unnecessary exposure of other people to the hazardous situation. The invention also pertains to a system on which the method for managing electrical supply of devices can be implemented.

### TECHNOLOGICAL BACKGROUND

In case of an emergency situation, electrical appliances can become a source of heightened risk to people exposed to the hazardous situation as well as to emergency services approaching the endangered area.

In case of fire, fire fighters as well as medical personnel are exposed to significant electrocution risks due to electrical devices damaged from fire but still plugged into the grid. Presence of water, conductive material or chemical substances may further increase this risk.

In addition, some devices may not be on fire, but become obstacles impeding people leaving the scene or emergency services accessing the endangered area. In addition, some infrastructure or objects may be considered as particularly valuable and worth preserving from the hazard. Some objects and infrastructure may represent a risk for spreading the hazardous situation and exposure of such material to the existing hazard should be prevented.

To operate safely in a hazardous environment, it is customary to switch off electrical supply of all devices located in an endangered area. Such an approach does not overcome the risk created by obstacles and hinders the relocation of valuable infrastructure and objects.

Electrical devices and operational power sources can sometimes prove to be life saving factors in emergency situations. Indeed, some supply of electricity can assist emergency services, for example by providing lighting, access to water, information with respect to the state of the endangered area and communication or transportation means that can help emergency services fulfill their rescue operations.

To provide the best possible assistance with a safe working environment, it is sought to have a more tailored approach to managing electrical supply of devices in a hazardous situation. EP2523150 describes a system and a method for optimizing plant operations.

### SUMMARY OF THE INVENTION

To overcome the above issues and provide a more tailored approach to managing electrical supply of devices in hazardous situations, the invention provides a method for managing electrical supply of at least one device connected to a central energy management unit comprising:
- obtaining a message informing the central energy management unit of a hazardous situation;
- sending from the central energy management unit a request of a status report of said at least one device;
- determining a risk assessment for said at least one device with respect to the hazardous situation, said risk assessment being based on the status report of said at least one device using a risk assessment algorithm;
- processing said risk assessment so as to determine and launch a safety procedure, said safety procedure affecting electrical supply of the at least one device based on the risk assessment.

In the invention, a central energy management unit is informed of the existence of a hazard and is provided with information on the status of devices in the vicinity of this hazard. This information can be processed by the central energy management unit, which computes a risk assessment of the situation based on the received information with the help of a risk assessment algorithm. The risk assessment is then processed to determine a safety procedure that is launched for a device that has established and sent a status report to the central energy management unit. The invention can also comprise safety procedures locally stored in consumer device management units associated to devices. In that case, the consumer device management unit computes the risk assessment and proposes a safety procedure that is provided to the central energy management unit for approval.

Processing of the risk assessment can for example be implemented by comparing the computed risk assessment to data stored in a memory. This comparison can trigger the selection of an adapted safety procedure. The adapted safety procedure can be either selected from a database of safety procedures, or can be generated to best account for the particular hazard that is of concern and in view of the status of the device.

In the invention, information is routed to the central energy management unit, capable of receiving information with respect to the status of electrical devices and information regarding a hazardous situation, for example communicated by sensors. The central energy management unit is a decision making device that manages the electrical supply of devices based on the nature of the hazard and the status of each device. The central energy management unit gathers information regarding the hazard, the electrical devices, and generates a course of actions regarding electrical supply of the devices. The central energy management unit can also check whether a pre-programmed set of actions suggested to it are acceptable in view of the general state of the network and the issues occurring in the hazardous situation.

By doing so, the invention provides a tailored response to an emergency situation, by adapting the response with respect to each electrical device, deciding whether or not the device should be switched off, its electrical supply cut off, whether the device can be moved or whether the device is not at risk of worsening the hazardous situation and should rather be kept active.

According to an embodiment, the method may further comprise:
- processing said risk assessment at the central energy management unit, and
- allocating the safety procedure to the at least one device from the central energy management unit.

In such an embodiment, the central energy management unit processes all the information it receives to determine the best course of action for each device.

According to an embodiment, the method may further comprise:
- processing said risk assessment at a consumer device management unit connected to the at least one device, said consumer device management unit being capable of communicating with the central energy management unit,
- providing the central energy management unit with a proposed safety procedure based on the processed risk assessment, and
- sending an authorization from the central energy management unit to the consumer device management unit to implement the proposed safety procedure.

This embodiment can be implemented in combination with the one previously described. In this embodiment, the central energy management unit does not compute all of the risk assessment, but rather evaluates suggestions sent by so-called "smart devices", that is to say, devices which are capable of communicating at least with the central energy management unit. The central energy management unit is a decision making device, which evaluates whether the decision that is suggested by a "smart device", for example via its consumer device management unit, is acceptable in view of the general state of the electrical network.

According to an embodiment, the method may further comprise:
- implementing the safety procedure, the safety procedure comprising turning off the at least one device.

Such a decision can be taken in particular for devices that generate electricity and send it back into the electrical network, such as solar panels for example. It can also be applied to devices that represent a heightened risk of electrocution. Such devices may for example include heaters, household appliances, computers.

According to an embodiment, the at least one device may be connected to a controllable outlet, the method further comprising:
- implementing the safety procedure, the safety procedure comprising switching off the controllable outlet to isolate the at least one device from an electrical supply thereof.

A controllable outlet can be seen as a "smart socket" which can be directly controlled by the central energy management unit. Such sockets can also comprise sensors providing information on the current status in the vicinity of the socket (for example temperature, whether there is a risk of a shortcut, amount of electricity consumed or generated at the device connected to the socket). Switching off a controllable outlet is another means of disconnecting a device from the grid that can be implemented instead of turning off the electrical device itself.

According to an embodiment, the at least one device may be connected to a switch unit, the method further comprising:
- implementing the safety procedure, the safety procedure comprising turning off the switch unit to isolate the at least one device from an electrical supply thereof.

A switch unit can typically be connected to a plurality of sockets. Acting directly on a switch unit enables disconnecting electricity supply to devices that are not "smart devices" and which are not connected to a controllable outlet. Such devices provide little information with respect to their status but can still represent a heightened risk with respect to the hazardous situation. For that reason, acting on a switch unit is an efficient way of preventing electrical current from reaching such devices.

According to an embodiment, the method may further comprise:
- implementing the safety procedure at the at least one device, and
- generating a safety report for the central energy management unit comprising updated information on the status of the at least one device.

Once the safety procedure is implemented, the safety report provides updated information on the status of the devices connected to the central energy management unit. If the hazardous situation were to evolve, the central energy management unit could undertake further action to adapt to the ongoing situation and ensure that safety of the devices and people evolving in the endangered environment is achieved.

In particular, the method may further comprise:
- sending the safety report to an emergency service unit communicating with the central energy management unit.

An emergency service unit can typically be an interface accessible to firefighters or any other emergency personnel to get updated information on the status of the devices and the hazardous situation. The safety report is typically translated into a language and a visual representation that is understandable to such personnel.

According to an embodiment, the at least one device can be an electrical vehicle, the method further comprising:
- determining a new position for the electrical vehicle based on the status report.

Electrical vehicles are valuable and movable objects which can represent a heightened security risk in case of a hazardous situation (for example a fire) if they are not moved to a different location. The invention enables deciding whether an electric vehicle connected to an outlet (socket) is exposed to the hazardous situation, and to compute a new position for the electric vehicle moving it away from danger and to a safer location.

In particular, the method may further comprise:
- determining the new position for the electrical vehicle at the central energy management unit.

The central energy management unit is a decision making component of the system of the invention. Even though an electric vehicle generally has its own processor and sensors to analyze a current hazardous situation and decide whether a new position for the vehicle is appropriate, the central energy management unit is the ultimate decider as to whether a new position should be accepted or not. The central energy management unit can for example accept a new position proposed by the electric vehicle, reject the request to move to a new position, or allocate a different position to the electric vehicle.

According to an embodiment, the method may further comprise:
- sending a request from the electrical vehicle to the central energy management unit for authorizing movement of the electrical vehicle to the new position.

According to an embodiment, the status report may comprise information chosen from among: a location of the at least one device with respect to the hazardous situation, a level of battery charge of the at least one device, a tethered or untethered state of the at least one device, a plugged or unplugged state of the at least one device, an amount of electricity consumed or generated by the at least one device, information as to whether the at least one device consumes or generates electricity, a temperature sensed at the at least one device, an ability of the at least one device to move or be moved from a current location, information as to whether the at least one device is one fire or at risk of catching fire.

According to an embodiment, the hazardous situation can be one among: a fire emergency, an explosion, a gas leak, an earthquake, flood, biological or chemical hazard.

The invention also pertains to a system for managing electrical supply of at least one device comprising:
- a central energy management unit, capable of communicating with the at least one device, the system being configured to implement the above-described method.

In particular, such a system may further comprise:
- at least one sensor capable of detecting a hazardous situation,
- at least one connected outlet capable of exchanging information with the central energy management unit,
- at least one switch unit, between the at least one device and the central energy management unit, capable of isolating the at least one device from an electrical supply thereof.

The invention is also directed to a computer program product comprising instructions for implementing the above-described method.

Furthermore, the invention can also be a non-transitory computer readable storage medium, having stored thereon a computer program comprising program instructions, the computer program being loadable into a data-processing unit and adapted to cause the data-processing unit to carry out the above-described method when the computer program is run by the data-processing device.

### BRIEF DESCRIPTION OF THE DRAWINGS

The method of the invention will be better understood by reading the detailed description of exemplary embodiments presented below. These embodiments are illustrative and by no means limitative. They are provided with the appended figures and drawings on which:
- figure 1 is a schematic representation of a system on which the method of the present invention can be implemented,
- figure 2 is a flow chart of a possible set of steps occurring when implementing the present invention,
- figure 3 is a possible embodiment for a device on which instructions for implementing the present invention can be executed .

For the sake of clarity, the dimensions of features represented on these figures may not necessarily correspond to the real-size proportions of the corresponding elements. Like reference numerals on the figures correspond to similar elements or items.

### DETAILED DESCRIPTION

The invention provides a method for managing electrical supply of at least one device and potentially a plurality of devices connected to sockets or "outlets" that are part of a connected infrastructure.

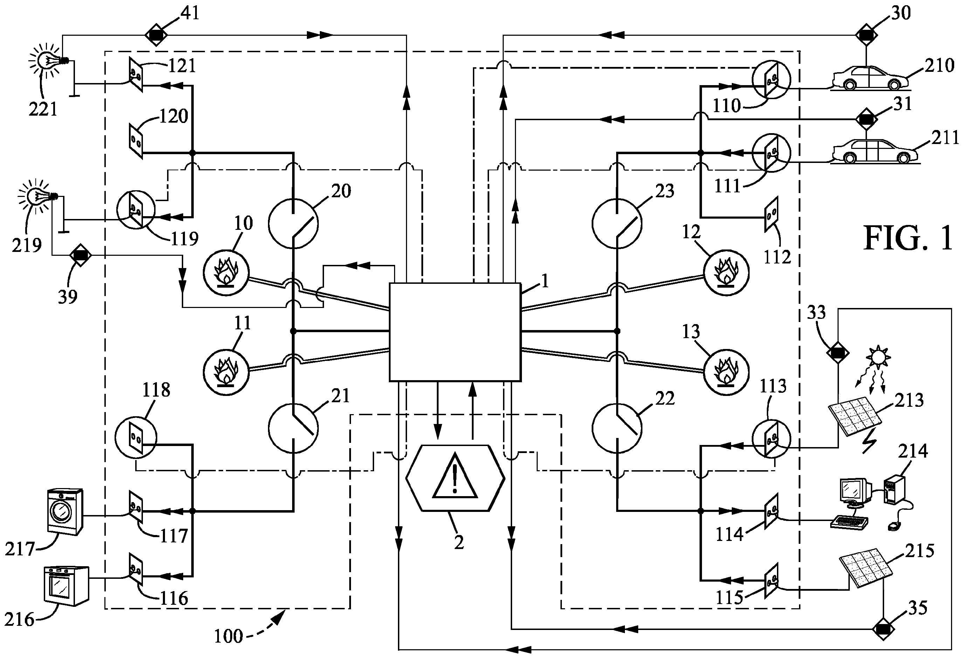

Figure 1 represents one such connected infrastructure **100.** The connected infrastructure **100** appears in the form of an electricity distribution system, sometimes referred to as a "Connected Building Electricity Distribution System", or CBEDS. The CBEDS comprises outlets, or sockets. Some of these outlets comprise specific functionalities that enable them to be remotely controlled by a central energy management unit **1.** These sockets are called "controllable outlets" **110, 111, 113, 118, 119.** Other outlets **112, 114, 115, 116, 117, 120, 121** are standard sockets capable of receiving plugs from different devices.

As represented on figure 1, the outlets are arranged in an electrical network which connects these outlets to switch units **20-23.** These switch units **20-23** are capable of turning off electricity supply to a whole group of outlets at once. The network generally leads electrical wires to a central energy management unit **1** which can receive and dispatch electricity from and to outlets.

The central energy management unit **1** can also be referred to as a "Central Smart Device" and can for example be a "Private Network Energy Management System" (PNEMS). Such a unit is for example proposed by the International Electrotechnical Commission (IEC) and is sometimes also called a "Customer Energy Manager" (CEM). The purpose of the central energy management unit **1** typically is to manage the electrical consumption of devices connected to the CBEDS, or to manage the electrical energy produced by energy producing devices connected to the connected infrastructure **100,** and store and dispatch this electrical energy. The central energy management unit **1** may also fulfil a monitoring role in the CBEDS. Furthermore, the central energy management unit **1** may ensure that the connected infrastructure operates in accordance with local electricity norms and benefits from services contracted before a Supplier of Electricity, a Distribution System Operator or any other system operator.

The CBEDS can further comprise sensors **10-13** capable of detecting particular parameters and trigger an alarm in case the monitored parameters indicate that a hazardous situation is ongoing. Sensors **10-13** communicate with the central energy management unit **1** to inform it of a hazardous situation if one such situation is detected. These sensors **10-13** can for example be fire detectors.

In particular, the hazardous situation can be any possible situation putting human lives or infrastructure at risk of being harmed, damaged or destroyed. Possible hazardous situations may for example include fire emergencies, earthquakes, explosions, gas leaks, flood, biological or chemical hazard.

In addition to the connected infrastructure **100,** or CBEDS, the schematics of figure 1 represents a number of devices **210, 211, 213-217, 219, 221** connected to respective outlets of the CBEDS. Some outlets in figure 1 are free and comprise no electrical device connected thereto. These free outlets **112, 118, 120** can be used to move an electrical device form one of the other outlets if the current position of the device exposes it to a risk with respect to a hazardous situation.

All types of devices may be connected to outlets of the CBEDS. Devices **210** and **211** are electric vehicles connected to controllable outlets **110, 111.** It is to be noted that electric vehicles can be consumers of electricity or sometimes suppliers of electricity. Devices **213, 215** are solar panels, that is, suppliers of electricity that inject electrical energy into the connected infrastructure **100.** Devices **216, 217** are household appliances. Device **214** is a computer or server. Devices **219, 221** are lighting units.

As can be seen on figure 1, some devices are not only connected to outlets of the CBEDS, but comprise a direct connection to the central energy management unit **1** of the CBEDS, via a consumer device management unit **30, 31, 33, 35, 39, 41,** also called "Connected Device Management System" or CDMS. These consumer device management units **30, 31, 33, 35, 39, 41** provide the respective devices they are a part of or connected to with additional functionalities. The corresponding devices **210, 211, 213, 215, 219, 221** are then called "smart devices" because they can establish a communication with the central energy management unit **1** and potentially also with other devices.

Another component that is capable of communicating with the connected infrastructure **100** is the emergency service unit **2** represented on figure 1. This emergency service unit **2** is capable of exchanging information with the central energy management unit **1** in order to request and receive information with respect to the general state of the connected infrastructure **100.** In case of a hazardous situation unfolding in the vicinity of the connected infrastructure **100,** the central energy management unit **1** receives relevant information from outlets, devices, sensors, consumer device management units and processes all this information to generate a safety report. This safety report is sent to the emergency service unit **2** which displays information from the safety report in human understandable form for the attention of emergency personnel such as for example firefighters operating in the area.

Although figure 1 represents a complex example of a connected infrastructure **100** that can benefit from the method of the present invention, it is to be noted that the method can be implemented in a much simpler system comprising one device connected to the central energy management unit **1.** In that case, the central energy management unit **1** controls the electrical supply of the device based on any information regarding a possible hazardous situation that the central energy management unit **1** may obtain.

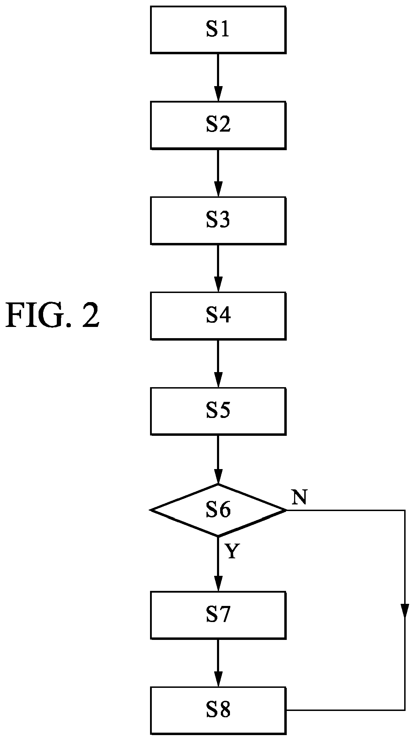

The flowchart of figure 2 provides one example of steps occurring when a hazardous situation occurs in the vicinity of a connected infrastructure **100.**

At first, at step S1, sensors **10-13** detect a hazardous situation. In a particular application of the invention, this hazardous situation can be a fire.

At step S2, sensors **10-13** notify the central energy management unit **1** of the ongoing fire. At step S3, the central energy management unit **1** polls devices **210, 211, 213-217, 219, 221** connected to the connected infrastructure **100,** as well as outlets **110-121,** or at least controllable outlets **110, 111, 113, 118, 119.** This polling step can be a request sent from the central energy management unit **1** to devices to receive a status report from the devices or outlets with respect to the ongoing fire.

The status report may contain all sorts of information with respect to the status of the device. For example, such information may comprise: a location of the device with respect to the hazardous situation, a level of battery charge of the device, a tethered or untethered state of the device, a plugged or unplugged state of the device, an amount of electricity consumed or generated by the device, information as to whether the device consumes or generates electricity, a temperature sensed at the device, an ability of the device to move or be moved from a current location, information as to whether the device is one fire or at risk of catching fire.

At step S4, a risk assessment is computed based on the status reports, to ascertain whether the devices or outlets represent a risk and whether specific actions should be taken at a global level. Step S4 can be implemented in different ways.

For example, the central energy management unit **1** can act on its own and compute risk assessments for each device for which a status report has been received. This determination of risk assessments is done using a risk assessment algorithm. This algorithm receives information from the status reports as input, and determines the criticality of the ongoing situation so that the central energy management unit 1 may react accordingly. The same can also be done for each outlet. Furthermore, a risk assessment can be determined for devices and outlets that are part of the connected infrastructure **100** for which no status report has been sent.

The risk assessment algorithm may typically receive, as inputs: a list of devices, the type of the devices, data provided by consumer device management units **30, 31, 33, 35, 39, 41,** the location of outlets **110-121** and controllable outlets **110, 111, 113, 118, 119** in the connected infrastructure **100,** the location of switch units **20-23,** data from various databases, such as for example maps, weather data, temperature, level of battery charge of devices, the current safety status of an outlet or device, capability of devices to move and the range of that movement capability.

It is also possible that some risk assessment be performed locally by "smart devices". In that case, a part of the risk assessment using a risk assessment algorithm may be computed locally by the "smart devices", or their consumer device management units **30, 31, 33, 35, 39, 41.** However, the result of such operations is sent for approval to the central energy management unit **1,** which acts as the ultimate decision maker, comparing and balancing all status reports and risk assessments to determine an appropriate course of actions in view of the general state of the connected infrastructure **100.**

At step S4, based on the determined risk assessments, the central energy management unit **1** generates a set of safety procedures, typically one for each device and/or outlet. A safety procedure typically comprises a set of actions that affect the electrical supply of devices and/or outlets.

It is also possible that "smart devices" comprise a database of safety procedures adapted for different pre-programmed hazardous situations. In that case, the "smart devices" and "controllable outlets" may propose a pre-recorded safety procedure to the central energy management unit **1** for approval.

Whenever the central energy management unit **1** receives a suggested risk assessment or suggested safety procedure, it compares the proposal to the general state of the connected infrastructure **100.** In response, the central energy management unit **1** may approve the suggested action, reject the suggested action, or order a different set of actions.

Once a set of safety procedures has been established, a safety report is generated at step S5, and sent to the emergency service unit **2.** The safety report comprises information usable by rescue services such as firefighters to inform them about the nature of the hazard, the ongoing situation and the state of the connected infrastructure **100.**

At step S6, the method checks whether any safety procedure needs to be implemented.

If so, the central energy management unit **1** orders the execution of the safety procedure by the outlet or device for which a safety procedure has been established at step S7.

The safety report is then updated based on the new status of the device or outlet at step S8.

It no safety procedure is needed, the safety report is still monitored to check how the situation evolves, but no further action is taken.

Among the actions that can be undertaken as part of a safety procedure, it is for example possible to order the device to shutdown, disconnect electrical supply of the device by switching off an outlet, disconnect a whole portion of outlets by deactivating a switch unit, disconnect a controllable outlet, or order a device to move to a different and safer location.

Electric vehicles are one example of devices that can benefit from the method of the invention. Safety procedures for electric vehicles may comprise evaluation of the need to move the electric vehicle and determination of the best new location for the electric vehicle.

Electric vehicles are valuable devices than contain their own vehicle management system (also called VMS), a large battery which can represent a fire hazard, controllable features including movement of the vehicle as well as communication capabilities with other infrastructure such as doors, signaling infrastructure and possibly telecommunication systems. The electric vehicle can also either consume electricity or feed electricity back into a connected infrastructure **100.**

Referring back to figure 1, and assuming a fire is detected by sensor **12,** devices **210** and **211** may for example provide the central energy management unit **1** with the following information: whether the vehicles are plugged in, the presence of a battery, the level of battery charge. The consumer device management units **30, 31** may be the VMS of the electric vehicles. These send information to the central energy management unit **1** which may order the VMS to stop charging or discharging the battery, and disconnect it from the controllable outlets **110, 111.** Communication between the VMS and central energy management unit **1** may use any relevant protocol designed for electric vehicles, such as for example ISO 15 118.

The electric vehicle is capable of updating its status using its own sensors, to determine the proximity of the hazard and whether the vehicle is on fire or at risk of catching fire.

The vehicle, or the central energy management unit **1,** determines a more appropriate location, for example away from the fire and closer to outlets **118** and **120** of figure 1. If the new location is approved by the central energy management unit **1,** the electric vehicles proceed with the relocation, communicating with any infrastructure such as garage doors, signaling infrastructure on the way.

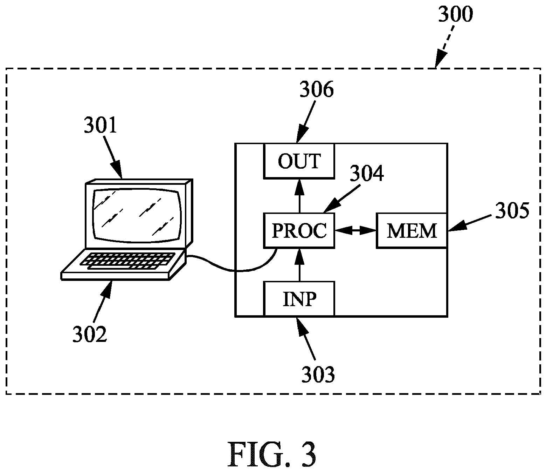

Figure 3 is a possible embodiment for a hardware device for implementing above-described method.

In this embodiment, device **300** comprises a computer, this computer comprising a memory **305** to store program instructions loadable into a circuit and adapted to cause circuit **304** to carry out the steps of the present invention when the program instructions are run by circuit **304.**

Memory **305** may also store data and useful information for carrying the steps of the present invention as described above.

Circuit **304** may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the invention are described within silicon, or
- a programmable electronic chip such as a FPGA chip (for « Field-Programmable Gate Array »).

This computer comprises an input interface **303** for the reception of data used for the above method according to the invention and an output interface **306** for providing a stacked model.

To ease the interaction with the computer, a screen **301** and a keyboard **302** may be provided and connected to the computer circuit **304.**

In the above, any reference to components referred to as "units", "devices", "systems" is to be understood as referring to a hardware, non-transitory component.

It is also to be noted that the invention can be implemented on systems (connected infrastructures) that differ in their configuration from the one represented on figure 1. A more complex system may for example comprise a plurality of central energy management units, capable of exchanging information, each central energy management unit being in charge of a predetermined geographical sector.

## Claims

1. Method for managing electrical supply of at least one device (210, 211, 213-218-, 219, 221) connected to a central energy management unit (1) comprising:
- obtaining a message informing the central energy management unit of a hazardous situation;
- sending from the central energy management unit a request of a status report of said at least one device;
- determining a risk assessment for said at least one device with respect to the hazardous situation, said risk assessment being based on the status report of said at least one device using a risk assessment algorithm;
- processing said risk assessment so as to determine and launch a safety procedure, said safety procedure affecting electrical supply of the at least one device based on the risk assessment,
the method being **characterized in that**, the at least one device being an electrical vehicle (210, 211), the method further comprises:
- determining a new position for the electrical vehicle based on the status report.

2. Method according to claim 1, further comprising:
- processing said risk assessment at the central energy management unit, and
- allocating the safety procedure to the at least one device from the central energy management unit.

3. Method according to any one of the preceding claims, further comprising:
- processing said risk assessment at a consumer device management unit (30, 31, 33, 35, 39, 41) connected to the at least one device, said consumer device management unit being capable of communicating with the central energy management unit,
- providing the central energy management unit with a proposed safety procedure based on the processed risk assessment, and
- sending an authorization from the central energy management unit to the consumer device management unit to implement the proposed safety procedure.

4. Method according to any one of the preceding claims, further comprising:
- implementing the safety procedure, the safety procedure comprising turning off the at least one device.

5. Method according to any one of the preceding claims, wherein the at least one device is connected to a controllable outlet (110, 111, 113, 118, 119, 121), the method further comprising:
- implementing the safety procedure, the safety procedure comprising switching off the controllable outlet to isolate the at least one device from an electrical supply thereof.

6. Method according to any one of the preceding claims, wherein the at least one device is connected to a switch unit (20-23), the method further comprising:
- implementing the safety procedure, the safety procedure comprising turning off the switch unit to isolate the at least one device from an electrical supply thereof.

7. Method according to any one of the preceding claims, further comprising:
- implementing the safety procedure at the at least one device, and
- generating a safety report for the central energy management unit comprising updated information on the status of the at least one device.

8. Method according to claim 7, further comprising:
- sending the safety report to an emergency service unit (2) communicating with the central energy management unit.

9. Method according to any one of the preceding claims, further comprising:
- determining the new position for the electrical vehicle at the central energy management unit.

10. Method according to any one of the preceding claims, further comprising:
- sending a request from the electrical vehicle to the central energy management unit for authorizing movement of the electrical vehicle to the new position.

11. Method according to any one of the preceding claims, wherein the status report comprises information chosen from among: a location of the at least one device with respect to the hazardous situation, a level of battery charge of the at least one device, a tethered or untethered state of the at least one device, a plugged or unplugged state of the at least one device, an amount of electricity consumed or generated by the at least one device, information as to whether the at least one device consumes or generates electricity, a temperature sensed at the at least one device, an ability of the at least one device to move or be moved from a current location, information as to whether the at least one device is one fire or at risk of catching fire.

12. Method according to any one of the preceding claims, wherein the hazardous situation is one among: a fire emergency, an explosion, a gas leak, an earthquake, flood, biological or chemical hazard.

13. System for managing electrical supply of at least one device comprising:
- a central energy management unit, capable of communicating with the at least one device,
the system being configured to implement a method according to any one of claims 1 to 12.

14. System according to claim 13, further comprising:
- at least one sensor (10-13) capable of detecting a hazardous situation,
- at least one connected outlet capable of exchanging information with the central energy management unit,
- at least one switch unit, between the at least one device and the central energy management unit, capable of isolating the at least one device from an electrical supply thereof.

15. Computer program product comprising instructions for implementing a method according to any one of claims 1 to 12.

16. A non-transitory computer readable storage medium, having stored thereon a computer program comprising program instructions, the computer program being loadable into a data-processing unit and adapted to cause the data-processing unit to carry out a method according to any one of claims 1 to 12 when the computer program is run by the data-processing device.

## Patentansprüche

1. Verfahren zur Verwaltung der Stromversorgung mindestens einer Vorrichtung (210, 211, 213-218-, 219, 221), die mit einer zentralen Energieverwaltungseinheit (1) verbunden ist, umfassend:
- Erhalten einer Nachricht, die die zentrale Energieverwaltungseinheit über eine gefährliche Situation informiert;
- Senden, von der zentralen Energieverwaltungseinheit, einer Anforderung für einen Statusbericht der mindestens einen Vorrichtung;
- Bestimmen einer Risikobewertung für die mindestens eine Vorrichtung in Bezug auf die gefährliche Situation, wobei die Risikobewertung auf dem Statusbericht der mindestens einen Vorrichtung unter Verwendung eines Risikobewertungsalgorithmus basiert;
- Verarbeiten der Risikobewertung, um einen Sicherheitsvorgang zu bestimmen und zu veranlassen, wobei der Sicherheitsvorgang die Stromversorgung der mindestens einen Vorrichtung auf der Basis der Risikobewertung beeinflusst,
- wobei das Verfahren **dadurch gekennzeichnet ist, dass** die mindestens eine Vorrichtung ein Elektrofahrzeug (210, 211) ist, wobei das Verfahren ferner Folgendes umfasst:
- Bestimmen einer neuen Position für das Elektrofahrzeug auf der Basis des Statusberichts.

2. Verfahren nach Anspruch 1, ferner umfassend:
- Verarbeiten der Risikobewertung an der zentralen Energieverwaltungseinheit, und
- Zuteilen des Sicherheitsvorgangs an die mindestens eine Vorrichtung von der zentralen Energieverwaltungseinheit.

3. Verfahren nach einem der vorhergehenden Ansprüche, ferner umfassend:
- Verarbeiten der Risikobewertung an einer Verbrauchervorrichtungsverwaltungseinheit (30, 31, 33, 35, 39, 41), die mit der mindestens einen Vorrichtung verbunden ist, wobei die Verbrauchervorrichtungsverwaltungseinheit dazu in der Lage ist, mit der zentralen Energieverwaltungseinheit zu kommunizieren,
- Versorgen der zentralen Energieverwaltungseinheit mit einem vorgeschlagenen Sicherheitsvorgang auf der Basis der verarbeiteten Risikobewertung, und
- Senden einer Autorisierung von der zentralen Energieverwaltungseinheit an die Verbrauchervorrichtungsverwaltungseinheit, um den vorgeschlagenen Sicherheitsvorgang umzusetzen.

4. Verfahren nach einem der vorhergehenden Ansprüche, ferner umfassend:
- Umsetzen des Sicherheitsvorgangs, wobei der Sicherheitsvorgang das Ausschalten der mindestens einen Vorrichtung umfasst.

5. Verfahren nach einem der vorangehenden Ansprüche, wobei die mindestens eine Vorrichtung mit einem steuerbaren Auslass (110, 111, 113, 118, 119, 121) verbunden ist, wobei das Verfahren ferner Folgendes umfasst:
- Umsetzen des Sicherheitsvorgangs, wobei der Sicherheitsvorgang das Ausschalten des steuerbaren Auslasses umfasst, um die mindestens eine Vorrichtung von einer Stromversorgung davon zu isolieren.

6. Verfahren nach einem der vorangehenden Ansprüche, wobei die mindestens eine Vorrichtung mit einer Schalteinheit (20-23) verbunden ist, wobei das Verfahren ferner Folgendes umfasst:
- Umsetzen des Sicherheitsvorgangs, wobei der Sicherheitsvorgang das Abschalten der Schalteinheit umfasst, um die mindestens eine Vorrichtung von einer Stromversorgung davon zu isolieren.

7. Verfahren nach einem der vorhergehenden Ansprüche, ferner umfassend:
- Umsetzen des Sicherheitsvorgangs an der mindestens einen Vorrichtung, und
- Erzeugen eines Sicherheitsberichts für die zentrale Energieverwaltungseinheit, der aktualisierte Informationen über den Status der mindestens einen Vorrichtung umfasst.

8. Verfahren nach Anspruch 7, ferner umfassend:
- Senden des Sicherheitsberichts an eine Notfalldiensteinheit (2), die mit der zentralen Energieverwaltungseinheit kommuniziert.

9. Verfahren nach einem der vorhergehenden Ansprüche, ferner umfassend:
- Bestimmen der neuen Position für das Elektrofahrzeug an der zentralen Energieverwaltungseinheit.

10. Verfahren nach einem der vorhergehenden Ansprüche, ferner umfassend:
- Senden einer Anforderung von dem Elektrofahrzeug an die zentrale Energieverwaltungseinheit zum Autorisieren von Bewegung des Elektrofahrzeugs in die neue Position.

11. Verfahren nach einem der vorangehenden Ansprüche, wobei der Statusbericht Informationen umfasst, die ausgewählt sind aus: einem Standort der mindestens einen Vorrichtung in Bezug auf die gefährliche Situation, einem Batterieladestand der mindestens einen Vorrichtung, einem drahtgebundenen oder drahtlosen Zustand der mindestens einen Vorrichtung, einem angeschlossenen oder nicht angeschlossenen Zustand der mindestens einen Vorrichtung, einer Menge von Strom, die von der mindestens einen Vorrichtung verbraucht oder erzeugt wird, Informationen darüber, ob die mindestens eine Vorrichtung Strom verbraucht oder generiert, einer Temperatur, die an der mindestens einen Vorrichtung erfasst wird, einer Fähigkeit der mindestens einen Vorrichtung, sich von einem aktuellen Standort zu bewegen oder daraus bewegt zu werden, Informationen darüber, ob die mindestens eine Vorrichtung brennt oder brandgefährdet ist.

12. Verfahren nach einem der vorangehenden Ansprüche, wobei die gefährliche Situation eines ist aus: einem Brandnotfall, einer Explosion, einem Gasleck, einem Erdbeben, einer Flut und biologischer oder chemischer Gefahr.

13. System zur Verwaltung der Stromversorgung mindestens einer Vorrichtung, umfassend:
- eine zentrale Energieverwaltungseinheit, die dazu in der Lage ist, mit der mindestens einen Vorrichtung zu kommunizieren,
wobei das System dazu ausgestaltet ist, ein Verfahren nach einem der Ansprüche 1 bis 12 umzusetzen.

14. System nach Anspruch 13, ferner umfassend:
- mindestens einen Sensor (10-13), der dazu in der Lage ist, eine gefährliche Situation zu detektieren,
- mindestens einen verbundenen Auslass, der dazu im der Lage ist, Informationen mit der zentralen Energieverwaltungseinheit auszutauschen,
- mindestens eine Schalteinheit, zwischen der mindestens einen Vorrichtung und der zentralen Energieverwaltungseinheit, die dazu in der Lage ist, die mindestens eine Vorrichtung von einer Stromversorgung davon zu isolieren.

15. Computerprogrammprodukt, das Anweisungen umfasst, um ein Verfahren nach einem der Ansprüche 1 bis 12 umzusetzen.

16. Nicht-vorübergehendes, computerlesbares Speichermedium, auf dem ein Computerprogramm gespeichert ist, das Programmanweisungen umfasst,
wobei das Computerprogramm in eine Datenverarbeitungseinheit ladbar ist und dazu angepasst ist, die Datenverarbeitungseinheit dazu zu veranlassen, das Verfahren nach einem der Ansprüche 1 bis 12 umzusetzen, wenn das Computerprogramm von der Datenverarbeitungsvorrichtung ausgeführt wird.

## Revendications

1. Procédé de gestion d'alimentation électrique d'au moins un dispositif (210, 211, 213-218, 219, 221) relié à une unité de gestion d'énergie centrale (1) comprenant :
- l'obtention d'un message informant l'unité de gestion d'énergie centrale d'une situation dangereuse ;
- l'envoi, depuis l'unité de gestion d'énergie centrale, d'une demande d'un rapport de statut dudit au moins un dispositif ;
- la détermination d'une évaluation de risque pour ledit au moins un dispositif en ce qui concerne la situation dangereuse, ladite évaluation de risque étant basée sur le rapport de statut dudit au moins un dispositif en utilisant un algorithme d'évaluation de risque ;
- le traitement de ladite évaluation de risque de manière à déterminer et lancer une procédure de sécurité, ladite procédure de sécurité affectant une alimentation électrique de l'au moins un dispositif sur la base de l'évaluation de risque,
le procédé étant **caractérisé en ce que**, l'au moins un dispositif étant un véhicule électrique (210, 211), le procédé comprend en outre :
- la détermination d'une nouvelle position pour le véhicule électrique sur la base du rapport de statut.

2. Procédé selon la revendication 1, comprenant en outre :
- le traitement de ladite évaluation de risque à l'unité de gestion d'énergie centrale, et
- l'allocation de la procédure de sécurité à l'au moins un dispositif depuis l'unité de gestion d'énergie centrale.

3. Procédé selon l'une quelconque des revendications précédentes, comprenant en outre :
- le traitement de ladite évaluation de risque à une unité de gestion de dispositif consommateur (30, 31, 33, 35, 39, 41) reliée à l'au moins un dispositif, ladite unité de gestion de dispositif consommateur étant capable de communiquer avec l'unité de gestion d'énergie centrale,
- la fourniture, à l'unité de gestion d'énergie centrale, d'une procédure de sécurité proposée sur la base de l'évaluation de risque traitée, et
- l'envoi d'une autorisation de l'unité de gestion d'énergie centrale à l'unité de gestion de dispositif consommateur pour mettre en œuvre la procédure de sécurité proposée.

4. Procédé selon l'une quelconque des revendications précédentes, comprenant en outre :
- la mise en œuvre de la procédure de sécurité, la procédure de sécurité comprenant l'arrêt de l'au moins un dispositif.

5. Procédé selon l'une quelconque des revendications précédentes, dans lequel l'au moins un dispositif est relié à une sortie pouvant être commandée (110, 111, 113, 118, 119, 121), le procédé comprenant en outre :
- la mise en œuvre de la procédure de sécurité, la procédure de sécurité comprenant l'arrêt de la sortie pouvant être commandée pour isoler l'au moins un dispositif d'une alimentation électrique de celui-ci.

6. Procédé selon l'une quelconque des revendications précédentes, dans lequel l'au moins un dispositif est relié à une unité de commutation (20-23), le procédé comprenant en outre :
- la mise en œuvre de la procédure de sécurité, la procédure de sécurité comprenant la désactivation de l'unité de commutation pour isoler l'au moins un dispositif d'une alimentation électrique de celui-ci.

7. Procédé selon l'une quelconque des revendications précédentes, comprenant en outre :
- la mise en œuvre de la procédure de sécurité à l'au moins un dispositif, et
- la génération d'un rapport de sécurité pour l'unité de gestion d'énergie centrale comprenant des informations mises à jour relatives au statut de l'au moins un dispositif.

8. Procédé selon la revendication 7, comprenant en outre :
- l'envoi du rapport de sécurité à une unité de service d'urgence (2) communiquant avec l'unité de gestion d'énergie centrale.

9. Procédé selon l'une quelconque des revendications précédentes, comprenant en outre :
- la détermination de la nouvelle position pour le véhicule électrique à l'unité de gestion d'énergie centrale.

10. Procédé selon l'une quelconque des revendications précédentes, comprenant en outre :
- l'envoi d'une demande du véhicule électrique à l'unité de gestion d'énergie centrale pour autoriser un déplacement du véhicule électrique vers la nouvelle position.

11. Procédé selon l'une quelconque des revendications précédentes, dans lequel le rapport de statut comprend des informations choisies parmi : un emplacement de l'au moins un dispositif par rapport à la situation dangereuse, un niveau de charge de batterie de l'au moins un dispositif, un état attaché ou détaché de l'au moins un dispositif, un état branché ou débranché de l'au moins un dispositif, une quantité d'électricité consommée ou générée par l'au moins un dispositif, des informations indiquant si l'au moins un dispositif consomme ou génère de l'électricité, une température détectée à l'au moins un dispositif, une capacité de l'au moins un dispositif à se déplacer ou à être déplacé depuis un emplacement actuel, des informations indiquant si l'au moins un dispositif est en feu ou risque de prendre feu.

12. Procédé selon l'une quelconque des revendications précédentes, dans lequel la situation dangereuse est l'un de : une urgence incendie, une explosion, une fuite de gaz, un tremblement de terre, une inondation, un danger biologique ou chimique.

13. Système de gestion d'alimentation électrique d'au moins un dispositif comprenant :
- une unité de gestion d'énergie centrale capable de communiquer avec l'au moins un dispositif,
le système étant configuré pour mettre en œuvre un procédé selon l'une quelconque des revendications 1 à 12.

14. Système selon la revendication 13, comprenant en outre :
- au moins un capteur (10-13) capable de détecter une situation dangereuse,
- au moins une sortie reliée capable d'échanger des informations avec l'unité de gestion d'énergie centrale,
- au moins une unité de commutation, entre l'au moins un dispositif et l'unité de gestion d'énergie centrale, capable d'isoler l'au moins un dispositif d'une alimentation électrique de celui-ci.

15. Produit de programme informatique comprenant des instructions pour mettre en œuvre un procédé selon l'une quelconque des revendications 1 à 12.

16. Support de stockage lisible par ordinateur non transitoire sur lequel est stocké un programme informatique comprenant des instructions de programme, le programme informatique pouvant être chargé dans une unité de traitement de données et étant apte à amener l'unité de traitement de données à réaliser un procédé selon l'une quelconque des revendications 1 à 12 lorsque le programme informatique est exécuté par le dispositif de traitement de données.
